# EUROPÄISCHE PATENTSCHRIFT

(11) **EP 3 317 142 B1**
(45) Veröffentlichungstag und Bekanntmachung des Hinweises auf die Patenterteilung: **12.12.2018**
(21) Anmeldenummer: 16729289.5
(22) Anmeldetag: 16.06.2016
(51) Int. Cl.: B60N 2/42, B60N 2/16

(54) **HÖHENEINSTELLBARER FAHRZEUGSITZ MIT CRASHSPERRENEINHEIT**
HEIGHT-ADJUSTABLE VEHICLE SEAT HAVING A CRASH BLOCKING UNIT
SIÈGE DE VÉHICULE RÉGLABLE EN HAUTEUR ÉQUIPÉ D'UNE UNITÉ ANTICOLLISION

(30) Priorität: 30.06.2015 DE 102015212238; 04.11.2015 DE 102015221563
(43) Veröffentlichungstag der Anmeldung: 09.05.2018
(73) Patentinhaber: Adient Luxembourg Holding S.à r.l., 1855 Luxembourg (LU)
(72) Erfinder: SCHUELER, Rolf, 42579 Heiligenhaus (DE)
(74) Vertreter: Liedhegener, Ralf
(86) Internationale Anmeldenummer: PCT/EP2016/063921
(87) Internationale Veröffentlichungsnummer: WO 2017/001206

(56) Entgegenhaltungen:
- WO-A1-01/12460
- WO-A1-2004/074037
- DE-A1- 10 025 675
- DE-A1- 10 056 082
- US-A1- 2005 134 099

## Beschreibung

Die Erfindung betrifft einen Fahrzeugsitz, insbesondere Kraftfahrzeugsitz, mit wenigstens einem Mehrgelenk zur Einstellung der Sitzhöhe, welches durch wenigstens fünf Getriebeglieder definiert ist, wobei das Mehrgelenk im Normalbetrieb des Fahrzeugsitzes aufgrund einer zwischen wenigstens zwei Getriebegliedern der wenigstens fünf Getriebeglieder wirksamen Verriegelungseinheit als Viergelenk wirksam ist, und einer Crashsperreneinheit, die im Crashfall wenigstens ein fahrzeugstrukturfestes Gestell und eine Schwinge als zwei der wenigstens fünf Getriebeglieder derart miteinander verriegelt, dass das Mehrgelenk als Dreigelenk wirkt, wobei zwischen dem Gestell und der Schwinge ein weiteres Getriebeglied der wenigstens fünf Getriebeglieder angeordnet ist, und wobei das Mehrgelenk im Crashfall aufgrund eines lastgesteuerten Entriegelns der Verriegelungseinheit zunächst als Fünfgelenk wirken kann, wodurch ein Verriegeln der Crashsperreneinheit auslösbar ist.

### Stand der Technik

Aus dem Stand der Technik sind höheneinstellbare Fahrzeugsitze bekannt, bei denen ein Gurtschloss mitfahrend ist, das heißt an der Bewegung des Höheneinstellers teilnimmt, um beispielsweise bei einem aufgrund einer ruckartigen Bewegung gesperrten Gurtaufroller und nachfolgender elektrischer Verstellung der Sitzhöhe nach oben, eine unkomfortabel hohe Kraft zwischen Gurt und Insasse zu vermeiden. Da das Gurtschloss des Fahrzeugsitzes in aller Regel auf der Fahrzeuginnenseite (Tunnelseite) angeordnet ist, der für eine elektrische Verstellung erforderliche Getriebemotor aus Bauraumgründen auf der Tunnelseite üblicherweise aber nicht platziert werden kann, wird die vom Gurtschloss in den Höheneinsteller eingeleitete Kraft über die Gesamtsteifigkeit eines Unterbaus des Fahrzeugsitzes von der Tunnelseite auf die Fahrzeugaußenseite (Schwellerseite) übertragen und dort von einem selbsthemmend ausgelegten Getriebemotor aufgenommen. Aufgrund dieser räumlichen Gegebenheiten und der nur endlich hohen Steifigkeiten der im Kraftfluss befindlichen Bauteile des Fahrzeugsitzes, ergibt sich bei einer Lasteinleitung über den Gurt in das Gurtschloss ein nennenswerter Weg des Gurtschlosses in Lastrichtung, der unter Umständen eine unerwünscht hohe Bewegung des Insassen relativ zum restlichen Fahrzeuginnenraum zur Folge hat. Zur Lösung dieses Problems sind aus dem Stand der Technik sogenannte Crashsperreneinheiten bekannt, die auf der Tunnelseite des Sitzes, also in unmittelbarer Nähe des Gurtschlosses, verbaut werden, und bei Belastung des Gurtschlosses eine zusätzliche steife Verbindung innerhalb einer Höheneinstellerkinematik bereitstellen. Diese Crashsperreneinheiten sperren in aller Regel die Drehbewegung zwischen einer Sitzschiene und einer an der Sitzschiene angelenkten hinteren Schwinge der Höheneinstellerkinematik.

Eine entsprechende Crashsperreneinheit ist aus der WO 2004/074037 A1 bekannt. Eine unter einer Crashbelastung kinematisch erzwungene Einsteuerbewegung einer an einer hinteren Schwinge angelenkten Klinke in die Verzahnung eines mit der Sitzschiene verbundenen Zahnsegmentes bewirkt lastabhängig eine Sperrung der Drehbewegung zwischen der hinteren Schwinge und der Sitzschiene. Obwohl die Crashsperreinheiten gemäß WO 2004/074037 A1 den bei Belastung des Gurtschlosses mit einer hohen Kraft auftretenden Weg deutlich reduziert, kann im Falle besonders weicher Sitzunterbauten eine für eine Auslösung der Crashsperreneinheit erforderliche notwendige Verformung des Fahrzeugsitzes recht hoch sein, zumal die im normalen Fahrbetrieb auftretenden Belastungen zu elastischen Deformationen führen können, die jedoch die Crashsperreinheit noch nicht auslösen lassen sollen. Um eine Auslösung bei Gebrauchslasten zu unterbinden, muss die Auslöseschwelle der Crashsperreinheit entsprechend hoch gewählt werden, was aber ein späteres Einfallen im Crashfall und damit eine unerwünscht große Relativbewegung des Gurtschlosses zur Folge hat.

Aus der DE 100 56 082 B4 ist eine Lösung bekannt, bei der ein verzögerungsabhängig sperrendes System zusätzlich lastabhängig angesteuert werden kann. Ein Gurtanbindungspunkt ist beweglich gelagert und eine unter Belastung entstehende Relativbewegung zwischen dem Gurtanbindungspunkt und einem Sitzrahmen wird mittels eines Seils auf eine sitzschienenfeste Sperre übertragen.

### Aufgabe

Der Erfindung liegt die Aufgabe zu Grunde, einen höheneinstellbaren Fahrzeugsitz mit einer Crashsperreneinheit der eingangs genannten Art zu verbessern. Der Erfindung liegt insbesondere die Aufgabe zugrunde, die einander widersprechenden Anforderungen an eine Funktionssicherheit im Fahrbetrieb und eine geringe Auslöseschwelle der Crashsperreneinheit im Crashfall zu erfüllen, ohne dass ein gegenüber dem Stand der Technik, insbesondere gegenüber einem aus der WO 2004/074037 A1 bekannten Fahrzeugsitz, deutlich höherer Aufwand an Bauteilen oder an Bauraum erforderlich ist.

### Lösung

Diese Aufgabe wird erfindungsgemäß durch einen Fahrzeugsitz mit den Merkmalen des Anspruchs 1 gelöst.

Dadurch, dass die Crashsperreneinheit unabhängig von einem lastgesteuerten Entriegeln der Verriegelungseinheit durch eine massenträgheitsgesteuerte Klinke der Crashsperreneinheit verriegelbar ist, kann die Crashsperreneinheit auf zwei unterschiedliche Weisen aktiviert werden, nämlich sowohl lastabhängig als auch massenträgheitsgesteuert. Der aus der WO 2004/074037 A1 bekannte Fahrzeugsitz kann somit eine zusätzliche massenträgheitsgesteuerte Verriegelung erhalten.

Vorzugsweise kann das Mehrgelenk im Crashfall mittels einer massenträgheitsgesteuerten Klinke der Crashsperreneinheit zu einem starren Dreigelenk werden, ohne dass das Mehrgelenk zuvor ein Fünfgelenk wird. Dadurch kann die Crashsperreneinheit schon zu Beginn eines Frontcrash, noch bevor die Gurtkräfte eine lastgesteuerte Verriegelung auslösen können, verriegeln.

Vorzugsweise weist das Mehrgelenk für eine lastgesteuerte Verriegelung der Crashsperreneinheit eine Steuerschwinge und eine Trägerschwinge auf, die im Normalfall mittels einer Verriegelungseinheit miteinander verriegelt sind, so dass das als Fünfgelenk ausgelegte Mehrgelenk kinematisch betrachtet als ein Viergelenk wirkt. Die Verriegelungseinheit hält die Steuerschwinge und eine Trägerschwinge im Frontcrash solange verriegelt, bis eine auf den Fahrzeugsitz wirkende Grenzkraft überschritten wird. Wird die Grenzkraft überschritten, öffnet die Verriegelungseinheit und das Mehrgelenk wirkt vorübergehend als Fünfgelenk. Die Steuerschwinge und die Trägerschwinge verdrehen sich dadurch relativ zueinander, bis die Klinke wirksam wird und das Mehrgelenk zu einem Dreigelenk verriegelt. Vorzugsweise ist die Schwinge, die durch die Verriegelungseinheit mit dem fahrzeugstrukturfesten Gestell unter Bildung eines Dreigelenks verriegelbar ist, die Trägerschwinge. Unter einer Trägerschwinge soll eine Schwinge verstanden werden, die ein weiteres Bauteil trägt, insbesondere eine Klinke trägt, die insbesondere zwischen zwei äußeren Gelenkpunkten der Schwinge angeordnet ist.

Vorzugsweise steuert die Klinke im Crashfall in ein Zahnsegment ein, wodurch das Dreigelenk entsteht. Das Zahnsegment kann an einem Gestell, beispielsweise einer Oberschiene eines als Längseinsteller dienenden Sitzschienenpaares befestigt sein. Die Klinke kann, insbesondere mittels eines Klinken-Lagerbolzens, schwenkbar an der Trägerschwinge gelagert sein. Die Klinke kann drehbar um eine Klinkendrehachse gelagert sein. Die Klinke kann drehbar um eine Klinkendrehachse an der Trägerschwinge gelagert sein.

Die Klinke ist erfindungsgemäß zusätzlich massenträgheitsgesteuert, so dass die Klinke der Crashsperreneinheit auch aufgrund von Massenträgheitskräften mit dem Zahnsegment verriegeln kann, ohne dass sich dazu die Steuerschwinge und die Trägerschwinge relativ zueinander verdrehen müssen. Die zwischen Steuerschwinge und Trägerschwinge wirksame Verriegelungseinheit kann während des massenträgheitsgesteuerten Verriegelns der Klinke verriegelt bleiben.

Der Massenschwerpunkt der Klinke ist exzentrisch zu einer Klinkendrehachse der Klinke angeordnet. Dazu kann die Klinke eine Zusatzmasse aufweisen, insbesondere im Vergleich zu aus dem Stand der Technik bekannten Klinken für Crashsperreneinheiten. Die Zusatzmasse kann an der Klinke befestigt sein. Die Zusatzmasse kann einteilig mit der Klinke ausgebildet sein.

Die Steuerschwinge weist vorzugsweise einen Zapfen auf, der eine Drehung der Klinke relativ zu der Trägerschwinge in Abhängigkeit eines Relativwinkels zwischen der Steuerschwinge und der Trägerschwinge steuern kann. Die Klinke weist dazu vorzugsweise eine Öffnung oder eine Vertiefung auf, insbesondere eine Steuernut, in die der Zapfen eingreift. Der Zapfen kann in wenigstens einer Drehrichtung der Klinke mit einem entkoppelnden Spiel in die Öffnung bzw. Vertiefung eingreifen. Der Zapfen kann bei entriegelter Verriegelungseinheit und einer Verdrehung der Trägerschwinge relativ zu der Steuerschwinge in wenigstens einer Drehrichtung einen Zahneingriff der Klinke mit dem Zahnsegment bewirken. In einer entgegengesetzten Drehrichtung der Klinke, die insbesondere zu einem Zahneingriff zwischen einem Verzahnungsbereich der Klinke und einem Zahnsegmentbereich des Zahnsegments führt, ist die Klinke vorzugsweise von dem Zapfen entkoppelt. Dadurch kann die Klinke massenträgheitsgesteuert verriegeln. Der Zapfen kann einteilig aus der Steuerschwinge ausgestellt sein. Der Zapfen kann an der Steuerschwinge befestigt, insbesondere vernietet sein. Der Steuerzapfen kann ein Bolzen sein. Der Steuerzapfen kann eine Buchse, insbesondere Kunststoffbuchse tragen, die zwischen dem Zapfen und der Klinke angeordnet ist und dadurch insbesondere eine Geräuschbildung vermeidet.

Die Klinke kann axial zwischen der Schwinge und einem Verstärkungsblech angeordnet sein. Das Verstärkungsblech kann fest mit der Trägerschwinge verbunden sein, beispielsweise mittels eines Distanzstücks oder Distanzrings. Dadurch lässt sich die Festigkeit der Crashsperreneinheit erhöhen.

Zusammenfassend ausgedrückt löst der erfindungsgemäße Fahrzeugsitz eine grundsätzliche Problematik, die sich aus der Tatsache ergibt, dass während eines Crashs, insbesondere Frontcrashs, eine ausreichend hohe Gurtlast zum Auslösen einer aus dem Stand der Technik bekannten Crashsperreinheit (und damit die Auslöseschwelle für lastgesteuerte Crashsperreinheit) erst erreicht wird, wenn der Insasse bereits vom Gurt zurückgehalten wird. Die eigentliche physikalische Ursache für die während des Crashs in einer bestimmten Reihenfolge ablaufenden Prozesse ist jedoch die Fahrzeugverzögerung, die quasi als zeitlich erste zur Verfügung stehende physikalische Größe gegeben ist und genutzt werden kann, um schon zeitlich vor Auftreten der Gurtlasten die Crashsperreinheit zu aktivieren. Alternativ zu den lastgesteuerten Crashsperreinheiten sind beschleunigungsaktivierte Mechanismen bekannt, beispielsweise aus der DE 100 56 082 B4, die entweder bei Überschreiten einer Grenzbeschleunigung einen vorgespannten Einsteuermechanismus freigeben, oder im einfachsten Fall eine den Mechanismus immer öffnend beaufschlagende Federkraft überwinden, solange die Beschleunigung wirkt. Eine Crashsperreinheit mit Freigabe eines vorgespannten Einsteuermechanismus hat den Vorteil, dass nach Auslösung das Sperrelement permanent in schließender Richtung beaufschlagt wird und somit eine gegebenenfalls kurzzeitig auftretende Kopf auf Kopf Stellung der in Zahneingriff zu bringenden Bauteile nach minimaler Relativbewegung überwunden wird. Eine derartige Crashsperreinheit hat aber den Nachteil, dass der Einsteuermechanismus seinerseits gegen unbeabsichtigte Auslösung während der Produktions- und Montagephase des Sitzes gesichert werden muss. Diejenigen Crashsperreinheiten, die nur während des Auftretens von Verzögerungen oberhalb der Auslöseschwelle eine Federkraft überwinden, um in den gesperrten Zustand zu gelangen, und ansonsten immer federbelastet in den ungesperrten Zustand zurückgeführt werden, haben zwar deutliche Praxisvorteile aufgrund der Reversibilität des Sperrvorgangs, bedürfen dafür aber einer besonderen Beachtung der geometrischen Bedingungen bei einer Kopf auf Kopf Stellung der Verzahnungen und einer präzisen Abstimmung der Auslöseschwelle, um im Normalbetrieb nicht zu störenden Nebenwirkungen zu führen.

Der erfindungsgemäße Fahrzeugsitz bietet eine Lösung der Gesamtproblematik, indem eine Crashsperreinheit verwendet wird, das sowohl durch eine Verzögerung im Crashfall als auch lastabhängig aktiviert werden kann, ohne dass eine aufwendige, bewegliche Gurtpunktlagerung mit einer Seilübertragung oder Bowdenzugübertragung benötigt wird. Die erfindungsgemäße Lösung ist zudem reversibel und kombiniert die Vorteile der jeweiligen aus dem Stand der Technik bekannten Lösungen.

Ein Vorteil des erfindungsgemäßen Fahrzeugsitzes ist es, dass gegenüber dem Stand der Technik, beispielsweise einem aus der WO 2004/074037 A1 bekannten Fahrzeugsitz, in Summe aufgrund der Erfindung für eine massenträgheitsgesteuerte Verriegelung nur relativ geringe Änderungen des Systems notwendig sind. Letztlich sind gegenüber dem Stand der Technik nur eine Änderung der Geometrie der Klinke und ein zusätzliches Federelement notwendig. Die Geometrieänderung der Klinke besteht in einer einseitigen Freimachung der Steuernut sowie in der Ergänzung von Material in möglichst großem Abstand zu einer Drehachse der Klinke, beispielsweise in einem oberen Bereich der Klinke. Zum lastabhängigen Einsteuern der Klinke in ein Zahnsegment ist ein Zapfen vorteilhaft, der die Steuernut nur einseitig Richtung des Zahnsegments beaufschlagt.

Eine Ruhigstellung der Klinke während des normalen Fahrbetriebs wird vorzugsweise mittels einer Feder, insbesondere einer Druckfeder erreicht. Diese kann in einem unteren Bereich der Klinke in Drehpunktnähe der Klinke angeordnet sein. Die Feder beaufschlagt die Klinke vorzugsweise derart, dass die Steuernut an dem Zapfen anliegt. Dadurch ist die Klinke in einer Ruhestellung gehalten. Die Klinke rotiert bei einer Fahrzeugverzögerung um ihren Drehpunkt, insbesondere einen Klinken-Lagerbolzen. Dabei löst sich der Kontakt zwischen dem Zapfen und der Steuernut zunächst, und die Klinke fällt beschleunigungsabhängig in die Verzahnung des Zahnsegmentes ein und sperrt somit schon zu einem Zeitpunkt, an dem die Gurtkräfte noch zu gering sind, um ein lastabhängiges Sperren (Verriegeln zwischen Klinke und Zahnsegment) zu bewirken. Sollte, aus welchen Gründen auch immer, dieses beschleunigungsabhängige Sperren nicht eintreten, beispielsweise aufgrund einer Kopf auf Kopf - Stellung der Verzahnungen von Klinke und Zahnsegment, so wird eine Verriegelung dennoch erreicht, und zwar bei einem Erreichen der hierfür erforderlichen Gurtlasten. Die Klinke wird somit dennoch lastabhängig in die nächst mögliche Sperrsituation gezwungen. Die so aufgebaute Crashsperreinheit weist den Vorteil der sehr frühzeitigen Verriegelung verzögerungsaktivierter Crashsperreinheiten ebenso auf, wie die Robustheit lastabhängig einsteuernder Systeme, ohne signifikant aufwendiger zu sein.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: eine schematische Prinzipskizze eines aus dem Stand der Technik bekannten Fahrzeugsitzes mit einer Crashsperreneinheit,
- Fig. 2:: eine schematische Darstellung eines aus dem Stand der Technik bekannten Fahrzeugsitzes im Bereich einer Crashsperreneinheit, in einem nicht aktivierten Zustand der Crashsperreneinheit,
- Fig. 3:: eine Fig. 2 entsprechende Darstellung während der Verriegelung der Crashsperreneinheit,
- Fig. 4:: eine schematische Darstellung eines ersten Ausführungsbeispiels eines erfindungsgemäßen Fahrzeugsitzes im Bereich einer Crashsperreneinheit, in einem nicht aktivierten Zustand der Crashsperreneinheit,
- Fig. 5:: eine Fig. 4 entsprechende Darstellung, wobei die Crashsperreneinheit vollständig verriegelt ist,
- Fig. 6:: eine Fig. 4 entsprechende Darstellung während der Verriegelung der Crashsperreneinheit, und
- Fig. 7:: ausschnittsweise eine perspektivische Explosionsdarstellung eines zweiten Ausführungsbeispiels eines erfindungsgemäßen Fahrzeugsitzes.

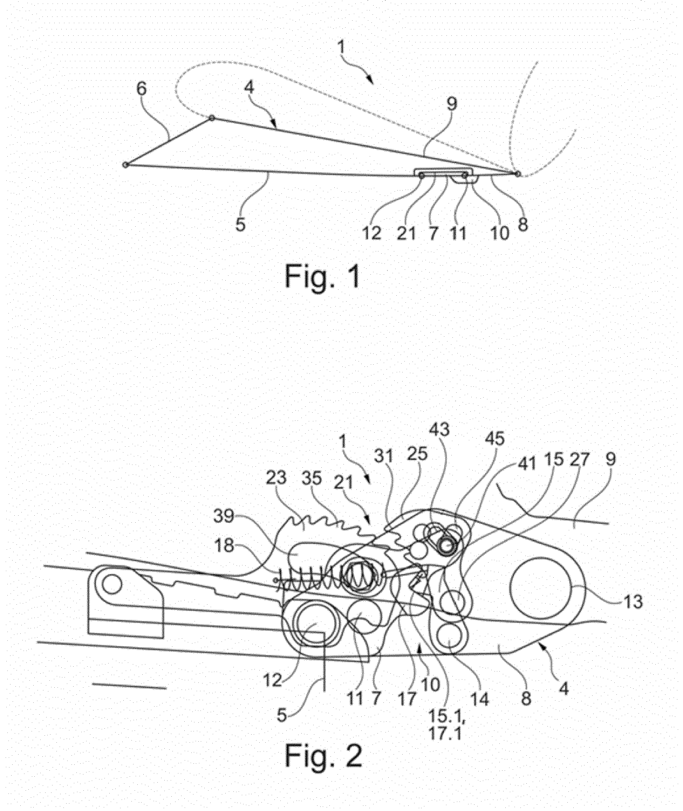

In den Figuren 1 bis 3 ist schematisch ein Fahrzeugsitz 1 dargestellt, wie dieser aus dem Stand der Technik bekannt ist und weitgehend einem aus der WO 2004/074037 A1 bekannten Fahrzeugsitz entspricht.

Der Fahrzeugsitz 1 ist höheneinstellbar und für ein Kraftfahrzeug vorgesehen. Als Höheneinsteller dienen auf beiden Fahrzeugsitzseiten Mehrgelenke, wobei im Ausführungsbeispiel der Fahrzeugsitz 1 ein Vordersitz ist, der in Fahrtrichtung betrachtet auf der linken Fahrzeugseite einbaubar ist. Auf der linken Seite (Schwellerseite des Kraftfahrzeugs) ist ein motorisch bewegliches Viergelenk und auf der rechten Seite (Tunnelseite) ein im Normalfall, d.h. außerhalb des Crashfalls, als Viergelenk wirksames Mehrgelenk 4 vorgesehen ist, welches dem motorisch angetriebenen Viergelenk entsprechende Abmessungen aufweist. Auf der rechten Seite weist der Fahrzeugsitz 1 ein mitfahrendes Gurtschloss auf. Mitfahrend bedeutet vorliegend, dass bei einer Höhenverstellung des Fahrzeugsitzes 1 auch das Gurtschloss mittels des Höheneinstellers in der Höhe entsprechend verfahren wird, so dass im Crashfall Gurtkräfte über den Höheneinsteller geleitet werden müssen.

Das Mehrgelenk 4 besteht aus fünf Getriebegliedern, nämlich einem fahrzeugstrukturfest zu verbindenden Gestell 5, vorliegend einer Oberschiene eines als Längseinsteller dienenden Sitzschienenpaares, einer am Gestell 5 angelenkten vorderen Schwinge 6, einer hinten am Gestell 5 angelenkten Steuerschwinge 7, einer an der Steuerschwinge 7 angelenkten Trägerschwinge 8 und einer an der vorderen Schwinge 6 und der Trägerschwinge 8 angelenkten Koppel 9, vorliegend einem Sitzrahmenseitenteil, an dem vorzugsweise auch das Gurtschloss befestigt ist. Dabei ist im Normalfall die Steuerschwinge 7 durch eine nachstehend beschriebene Verriegelungseinheit 10 starr mit der Trägerschwinge 8 verbunden. Das Mehrgelenk 4 ist also ein Fünfgelenk, welches aber durch das Verriegeln zwischen Steuerschwinge 7 und Trägerschwinge 8 im Normalfall als Viergelenk wirkt. Die Trägerschwinge 8 ist mittels eines Verbindungsbolzens 11 an der Steuerschwinge 7 angelenkt, die Anlenkung der Steuerschwinge 7 am Gestell 5 erfolgt mittels eines Gelenkbolzens 12, und als Anlenkstelle zwischen der Trägerschwinge 8 und der Koppel 9 dient ein rundes Querrohr 13, welches zugleich einen Teil des Sitzrahmens bildet. Die Trägerschwinge 8 umschließt mit einem nicht näher dargestellten Langloch den Gelenkbolzen 12 mit Spiel.

Die Verriegelungseinheit 10 für die im Normalfall vorhandene starre Verbindung zwischen der Steuerschwinge 7 und der Trägerschwinge 8 weist an der Trägerschwinge 8 in einem Bereich hinter dem Verbindungsbolzen 11 einen mittels eines Riegel-Lagerbolzens 14 angelenkten Riegel 15 auf, der in ein Gegenstück 17 greift, welches starr mit der Steuerschwinge 7 verbunden ist. Dabei weist der Riegel 15 eine Funktionsfläche 15.1 auf, welche im Frontcrash relevant wird. Eine als Zugfeder ausgebildete Feder 18 ist zwischen dem Riegel 15 und einer vor dem Verbindungsbolzen 11 vorgesehenen Abwinklung der Trägerschwinge 8 eingehängt. Die Feder 18 spannt den in das Gegenstück 17 greifenden Riegel 15 vor, wobei die Winkel zwischen der Funktionsfläche 15.1 und einer entsprechenden Anlagefläche 17.1 des Gegenstücks 17 außerhalb des Selbsthemmungsbereichs liegen. Dabei wird durch die Vorspannung der Feder 18 eine Grenzkraft definiert, bis zu welcher die Verriegelungseinheit 10 im Frontcrash kraftschlüssig hält, d.h. die Steuerschwinge 7 und die Trägerschwinge 8 miteinander starr verbunden sind.

Eine Crashsperreneinheit 21 des Fünfgelenks 4, welche im Frontcrash verriegelt, weist ein am Gestell 5 angebrachtes Zahnsegment 23 und eine Klinke 25 auf, welche mittels eines Klinken-Lagerbolzens 27 schwenkbar um eine Klinkendrehachse 26 an der Trägerschwinge 8 gelagert ist. Die zweiarmig ausgebildete, näherungsweise vertikal angeordnete Klinke 25 weist einen Verzahnungsbereich 31 auf.

Das um den Gelenkbolzen 12 gekrümmte Zahnsegment 23, welches in geringem Abstand zur Klinke 25 angeordnet ist, ist als Gegenelement zur Klinke 25 vorgesehen. Das Zahnsegment 23 weist ebenfalls einen Bereich von Zähnen auf, nämlich einen Zahnsegmentbereich 35, welcher zum Zusammenwirken mit dem Verzahnungsbereich 31 der Klinke 25 ausgebildet ist, d.h. mit entsprechend ausgebildeten Zähnen versehen ist.

Bei einer Schwenkbewegung der Steuerschwinge 7 und der mit ihr verriegelten Trägerschwinge 8 um den Gelenkbolzen 12, wie sie bei einer Höheneinstellung des Fahrzeugsitzes 1 auftritt, wandern der Verzahnungsbereich 31 der Klinke 25 an dem Zahnsegmentbereich 35 entlang. Um in jeder Einstellung des Fünfgelenks 4 ein Zusammenwirken gewährleisten zu können, ist der Zahnsegmentbereich 35 länger als der entsprechenden Verzahnungsbereich 31 ausgebildet. Für eine Verbesserung der Führung ragt der Verbindungsbolzen 11 durch eine Kulisse 39 des Zahnsegments 23, welche um den Gelenkbolzen 12 gekrümmt ist.

Zur Kopplung zwischen der Klinke 25 und der Steuerschwinge 7 steht an dem vom Gelenkbolzen 12 entfernt liegenden, oberen Ende der Steuerschwinge 7 parallel zum Gelenkbolzen 12 ein Zapfen 41 ab, welcher durch ein Langloch 43 in der Trägerschwinge 8 greift, und dessen anderes Ende in eine Steuernut 45 der Klinke 25 geführt ist. Das Langloch 43 ermöglicht eine für die beschriebene Funktionsfähigkeit der Klinke 45 notwendige Beweglichkeit des Zapfens 41.

Im Frontcrashfall wirkt aufgrund der auf das Gurtschloss wirkenden Kraft und des Sperrens des motorisch angetriebenen Viergelenks auf der anderen Fahrzeugsitzseite über das Querrohr 13 ein Drehmoment, welches versucht, das Mehrgelenk 4 aufzurichten. Dieses Drehmoment erzeugt ein Gegenmoment am Gelenkbolzen 12, welches versucht, die Steuerschwinge 7 relativ zur Trägerschwinge 8 zu verdrehen. Zunächst hält die Feder 18 noch den Riegel 15 im Gegenstück 17, wobei die Funktionsfläche 15.1 versucht, aus dem Gegenstück 17 zu gelangen. Sobald die Grenzkraft überschritten wird, kommt der Riegel 15 frei, so dass die Verriegelungseinheit 10 öffnet und die starre Verbindung zwischen der Steuerschwinge 7 und der Trägerschwinge 8 aufgehoben ist. Das Mehrgelenk 4 ist nun ein echtes Fünfgelenk, welches eine geringe Geometrieänderung aufgrund der Schwenkbewegung zwischen Trägerschwinge 8 und Steuerschwinge 7 erfährt.

Diese Schwenkbewegung bewirkt über die Kopplung mit dem Zapfen 41, dass die Klinke 25 geschwenkt wird, was zu einem zwangsgesteuerten Zahneingriff der Klinke 25 in das Zahnsegment 23 führt. Dadurch wird die Trägerschwinge 8 durch die Crashsperreneinheit 21 unter Überbrückung der Steuerschwinge 7 mit dem Gestell 5 verriegelt, das heißt, das zu einem starren Dreigelenk werdende Mehrgelenk 4 wird gesperrt, und das ganze System wird steifer. Die Crashlasten können so direkt in die Fahrzeugstruktur geleitet werden und bewirken somit nur eine geringe Deformation in der Sitzstruktur. Aufgrund der geringen Geometrieänderung wird ein im Bereich der Koppel 9 vorgesehener Gurtanbindungspunkt oder Gurtschlossanbindungspunkt nur geringfügig vorverlagert.

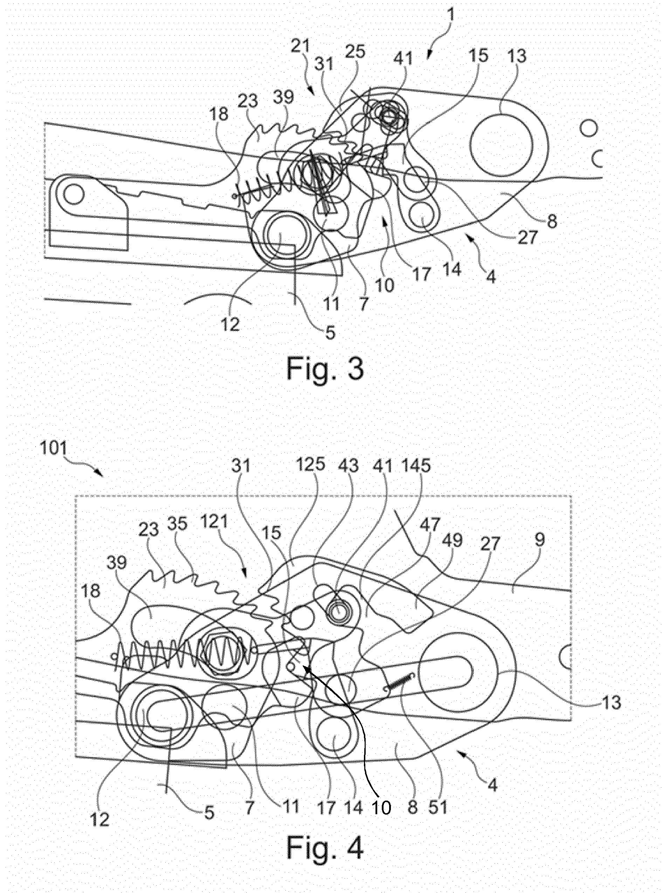

Die Figuren 4 bis 6 zeigen ausschnittsweise ein erstes Ausführungsbeispiel eines erfindungsgemäßen Fahrzeugsitzes 101, der bis auf die nachfolgend abweichend beschriebenen Bauteile und Funktionen dem zuvor unter Bezugnahme auf die Figuren 1 bis 3 beschriebenen, aus dem Stand der Technik bekannten Fahrzeugsitz 1 entspricht. Gleiche oder gleichwirkende Bauteile tragen daher dieselben Bezugszeichen.

Eine Crashsperreneinheit 121 des Fünfgelenks 4, welche im Frontcrash verriegelt, weist ein am Gestell 5 angebrachtes Zahnsegment 23 und eine Klinke 125 auf, welche mittels eines Klinken-Lagerbolzens 27 schwenkbar um eine Klinkendrehachse 26 an der Trägerschwinge 8 gelagert ist. Die Klinke 125 weist einen Verzahnungsbereich 31 auf.

Die gegenüber dem Stand der Technik abweichend ausgebildete Klinke 125 weist eine Steuernut 145 auf, in die der Zapfen 41 eingreift. Die Steuernut 145 ist durch eine Öffnung 47 in einer von dem Verzahnungsbereich 31 abgewandten Richtung geöffnet. Dadurch ist die Klinke 125, im Gegensatz zum zuvor beschriebenen Stand der Technik, begrenzt beweglich relativ zum Zapfen 41. Eine Druckfeder 51 spannt die Klinke 125 derart in eine Drehrichtung vor, dass der Verzahnungsbereich 31 der Klinke 125 von dem Zahnsegmentbereich 35 des Zahnsegments 23 weg dreht, bis eine dem Verzahnungsbereich 31 gegenüberliegende Begrenzungswand der Steuernut 145 an dem Zapfen 41 anliegt. Diese Situation entspricht dem Normalfall.

Während eines Frontcrashs schwenkt aufgrund von Massenträgheitskräften der Klinke 125 und unter Vorspannung der Druckfeder 51 die Klinke 125 in Richtung eines Zahneingriffs zwischen dem Verzahnungsbereich 31 der Klinke 125 und dem Zahnsegmentbereich 35 des Zahnsegments 23. Dabei löst sich der Zapfen 41 von der Begrenzungswand der Steuernut 145. Die Massenträgheitskräfte der Klinke 125 werden dabei durch einen exzentrisch zum Klinken-Lagerbolzen 27 angeordneten Schwerpunkt der Klinke 125 erzeugt. Zur Vergrößerung der Exzentrizität zwischen dem Klinken-Lagerbolzen 27 und dem Schwerpunkt der Klinke 125 weist die Klinke eine Zusatzmasse 49 auf, die bezogen auf den Klinken-Lagerbolzen 27 radial außen und von dem Verzahnungsbereich 31 abgewandt angeordnet ist. Die Zusatzmasse 49 ist vorliegend einteilig mit der Klinke 125 ausgeführt.

Figur 4 zeigt die Crashsperreneinheit 121 in einem Normalfall, in dem die Klinke 125 und das Zahnsegment 23 außer Zahneingriff sind. Es gibt zwei Möglichkeiten, wie die Klinke 125 während eines Frontcrashs in Zahneingriff mit dem Zahnsegment 23 geraten kann. Die erste Möglichkeit entspricht der zuvor unter Bezugnahme auf die Figuren 1 bis 3 ausführlich beschriebenen, aus dem Stand der Technik bekannten Verriegelung, die aufgrund einer im Frontcrashfall auf das Gurtschloss wirkenden Kraft erfolgt. Die zweite Möglichkeit ist die Verriegelung mittels der Massenträgheitskräfte der Klinke 125. Somit stehen zwei unterschiedliche technische Wirkprinzipien zur Verriegelung der Crashsperreneinheit 121 zur Verfügung. Während eines Frontcrashs können die Massenträgheitskräfte in der zeitlichen Abfolge die Klinke 125 bereits verriegeln, bevor die Kräfte auf das Gurtschloss ausreichend groß sind, um den Riegel 15 von dem Gegenstück 17 zu lösen und dadurch letztlich die Klinke 125 mittels des Zapfens 41 zu schwenken.

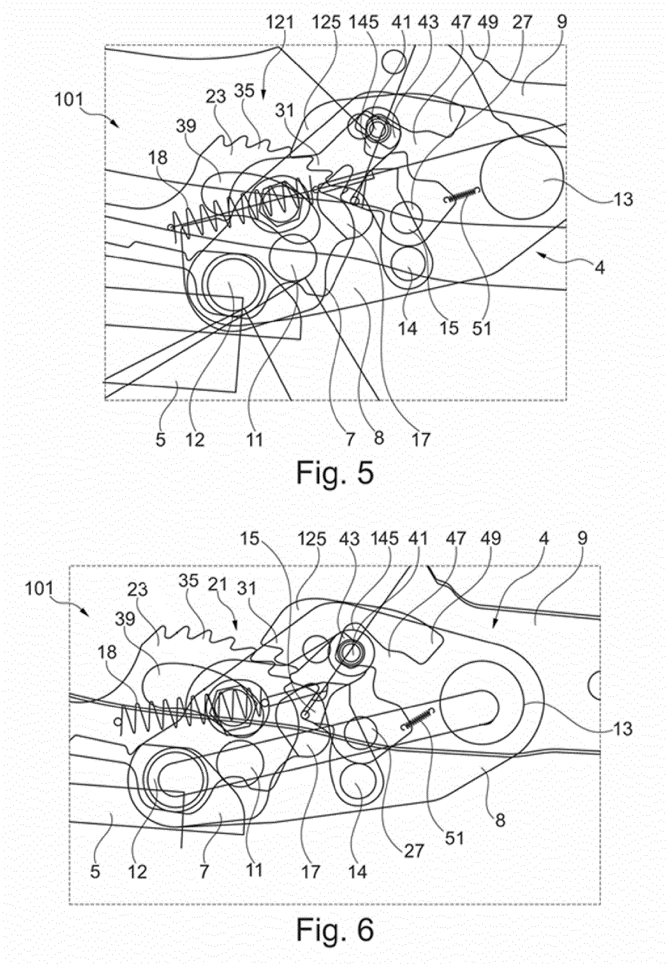

Figur 5 zeigt einen verriegelten Zustand der Crashsperreneinheit 121, in dem die Klinke 125 vollständig mit dem Zahnsegment 23 verriegelt hat. Je nach Art und Richtung des Frontcrashs kann der Bewegungsablauf während des Frontcrashs variieren: Der Verzahnungsbereich der Klinke 125 kann zeitlich zuerst aufgrund der Massenträgheitskräfte in den Zahnsegmentbereich 35 des Zahnsegments 23 einfallen und anschließend der Zapfen 41 nachrücken. Es ist jedoch auch möglich, dass beide Wirkprinzipien annähernd zeitgleich stattfinden.

Figur 6 zeigt einen weiteren möglichen Zustand während eines Frontcrashs. Der Verzahnungsbereich 31 der Klinke 125 ist relativ zu dem Zahnsegmentbereich 35 des Zahnsegments 23 in einer Stellung, in der die Zahnköpfe der Verzahnungen aufeinander stehen und dadurch ein Zahneingriff nur aufgrund der Massenträgheitskräfte nicht möglich ist. In diesem Fall wird der Zapfen 41, nach einer geringfügigen Deformation des Fahrzeugsitzes 101 aufgrund der Gurtkräfte und einer daraus resultierenden Relativbewegung zwischen Klinke 125 und Zahnsegment 23, die Klinke 125 in vollständigen Zahneingriff mit dem Zahnsegment 23 bringen.

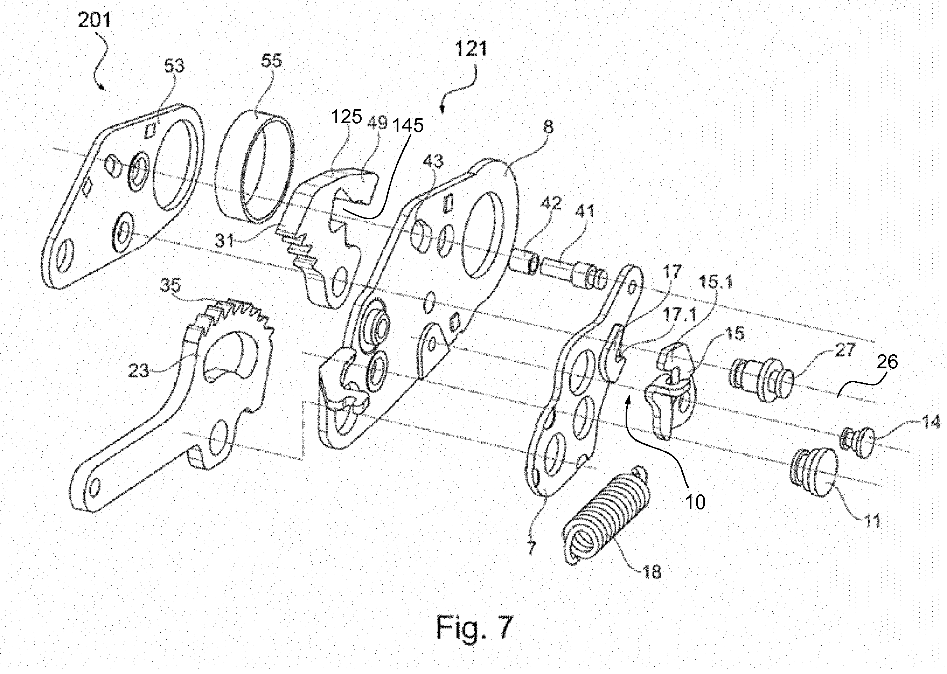

Die Figur 7 zeigt ein zweites Ausführungsbeispiel eines erfindungsgemäßen Fahrzeugsitzes 201, der bis auf die nachfolgend abweichend beschriebenen Bauteile und Funktionen dem zuvor unter Bezugnahme auf die Figuren 4 bis 6 beschriebenen Fahrzeugsitz 101 des ersten Ausführungsbeispiels entspricht. Zur Erklärung der gleichwirkenden Bauteile und der gleichen Funktionen wird daher auf die Beschreibung des ersten Ausführungsbeispiels verwiesen. Gleiche oder gleichwirkende Bauteile tragen zudem dieselben Bezugszeichen wie im ersten Ausführungsbeispiel.

Eine Trägerschwinge 8 des Fahrzeugsitzes 201 ist mittels eines Verstärkungsblechs 53 verstärkt. Das Verstärkungsblech 53 ist parallel zu der Trägerschwinge 8 angeordnet. Das Verstärkungsblech 53 ist zu der Trägerschwinge 8 beabstandet angeordnet. Ein Distanzring 55 verbindet die Trägerschwinge 8 mit dem Verstärkungsblech 53. Der Distanzring 55 ist zylinderförmig. Eine Mittelachse des Distanzrings verläuft parallel zur Drehachse der Klinke 125. Die Trägerschwinge 8 liegt an einem ersten Ende des Distanzrings 55 an und ist mit diesem verschweißt. Das Verstärkungsblech 53 liegt an dem anderen Ende des Distanzrings 55 an und ist mit diesem verschweißt. Die Klinke 125 ist in axialer Richtung zwischen der Trägerschwinge 8 und dem Verstärkungsblech 53 angeordnet. Zudem ist das Zahnsegment 23 in axialer Richtung zwischen der Trägerschwinge 8 und dem Verstärkungsblech 53 angeordnet. Der Begriff axial bezieht sich auf die Klinkendrehachse 26.

Ein Zapfen 41 ist ein separat von der Steuerschwinge 7 ausgebildetes Bauteil. Der Zapfen 41 ist mit der Steuerschwinge 7 vernietet. Der Zapfen 41 trägt eine Buchse 42, die vorzugsweise aus einem Kunststoff besteht. Eine in Figur 7 nicht dargestellte Druckfeder spannt die Klinke 125 derart in eine Drehrichtung vor, dass ein Verzahnungsbereich 31 der Klinke 125 von einem Zahnsegmentbereich 35 eines Zahnsegments 23 weg dreht, bis eine dem Verzahnungsbereich 31 gegenüberliegende Begrenzungswand der Steuernut 145 der Klinke 125 an der Buchse 42 des Zapfens 41 anliegt. Diese Situation entspricht dem Normalfall. Bezüglich der Abläufe im Frontcrashfall stimmt das zweite Ausführungsbeispiel mit dem ersten Ausführungsbeispiel überein. Insbesondere ist die Crashsperreneinheit 121 unabhängig von einem lastgesteuerten Entriegeln der Verriegelungseinheit 10 durch die massenträgheitsgesteuerte Klinke 125 verriegelbar.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen, die den Umfang der Erfindung definieren.

### Bezugszeichenliste

- 1, 101, 201: Fahrzeugsitz
- 4: Mehrgelenk
- 5: Gestell
- 6: vordere Schwinge
- 7: Steuerschwinge
- 8: Schwinge, Trägerschwinge
- 9: Koppel
- 10: Verriegelungseinheit
- 11: Verbindungsbolzen
- 12: Gelenkbolzen
- 13: Querrohr
- 14: Riegel-Lagerbolzen
- 15: Riegel
- 15.1: Funktionsfläche
- 17: Gegenstück
- 17.1: Anlagefläche
- 18: Feder
- 21, 121: Crashsperreneinheit
- 23: Zahnsegment, Gegenelement
- 25, 125: Klinke
- 26: Klinkendrehachse
- 27: Klinken-Lagerbolzen
- 31: Verzahnungsbereich
- 33: Schwerpunkt
- 35: Zahnsegmentbereich
- 39: Kulisse
- 41: Zapfen
- 42: Buchse
- 43: Langloch
- 45, 145: Steuernut
- 47: Öffnung
- 49: Zusatzmasse
- 51: Druckfeder
- 53: Verstärkungsblech
- 55: Distanzring

## Patentansprüche

1. Fahrzeugsitz (101, 201), insbesondere Kraftfahrzeugsitz, mit wenigstens einem Mehrgelenk (4) zur Einstellung der Sitzhöhe, welches durch wenigstens fünf Getriebeglieder (5, 6, 7, 8, 9) definiert ist, wobei das Mehrgelenk (4) im Normalbetrieb des Fahrzeugsitzes (101, 201) aufgrund einer zwischen wenigstens zwei Getriebegliedern (7, 8) der wenigstens fünf Getriebeglieder (5, 6, 7, 8, 9) wirksamen Verriegelungseinheit (10) als Viergelenk wirksam ist,
und einer Crashsperreneinheit (121), die im Crashfall wenigstens ein fahrzeugstrukturfestes Gestell (5) und eine Schwinge (8) als zwei der wenigstens fünf Getriebeglieder (5, 6, 7, 8, 9) derart miteinander verriegelt, dass das Mehrgelenk (4) als Dreigelenk wirkt, wobei zwischen dem Gestell (5) und der Schwinge (8) ein weiteres Getriebeglied (7) der wenigstens fünf Getriebeglieder (5, 6, 7, 8, 9) angeordnet ist, und wobei das Mehrgelenk (4) im Crashfall aufgrund eines lastgesteuerten Entriegelns der Verriegelungseinheit (10) zunächst als Fünfgelenk wirken kann, wodurch ein Verriegeln der Crashsperreneinheit (121) auslösbar ist,
**dadurch gekennzeichnet, dass**
die Crashsperreneinheit (121) unabhängig von einem lastgesteuerten Entriegeln der Verriegelungseinheit (10) durch eine massenträgheitsgesteuerte Klinke (125) der Crashsperreneinheit (121) verriegelbar ist.

2. Fahrzeugsitz (101, 201) nach Anspruch 1, **dadurch gekennzeichnet, dass** die Klinke (125) einen Verzahnungsbereich (31) aufweist, der lastgesteuert mit einem am Gestell (5) befestigten Zahnsegment (23) in Zahneingriff bringbar ist.

3. Fahrzeugsitz (101, 201) nach Anspruch 2, **dadurch gekennzeichnet, dass** die Klinke (125) einen Verzahnungsbereich (31) aufweist, der massenträgheitsgesteuert mit dem am Gestell (5) befestigten Zahnsegment (23) in Zahneingriff bringbar ist.

4. Fahrzeugsitz (101, 201) nach einem der vorhergehenden Ansprüche, **dadurch gekennzeichnet, dass** die Klinke (125) drehbar um eine Klinkendrehachse (26) gelagert ist.

5. Fahrzeugsitz (101, 201) nach einem der vorhergehenden Ansprüche, **dadurch gekennzeichnet, dass** die Schwinge eine Trägerschwinge (8) ist.

6. Fahrzeugsitz (101, 201) nach Anspruch 5, **dadurch gekennzeichnet, dass** die Klinke (125) drehbar um die Klinkendrehachse (26) an der Trägerschwinge (8) gelagert ist.

7. Fahrzeugsitz (101, 201) nach einem der vorhergehenden Ansprüche, **dadurch gekennzeichnet, dass** der Massenschwerpunkt der Klinke (125) exzentrisch zu einer Klinkendrehachse (26) der Klinke (125) angeordnet ist.

8. Fahrzeugsitz (101, 201) nach einem der vorhergehenden Ansprüche, **dadurch gekennzeichnet, dass** im Normalbetrieb des Fahrzeugsitzes (101, 201) die Verriegelungseinheit (10) eine Trägerschwinge (8) und eine drehbar zu der Trägerschwinge (8) gelagerte Steuerschwinge (7) miteinander verriegelt.

9. Fahrzeugsitz (101, 201) nach Anspruch 8, **dadurch gekennzeichnet, dass** die Steuerschwinge (7) einen Zapfen (41) aufweist, der in eine Steuernut (145) der Klinke (125) eingreift, wobei die Klinke (125) drehbar um die Klinkendrehachse (26) an der Trägerschwinge (8) gelagert ist.

10. Fahrzeugsitz (101, 201) nach den Ansprüchen 2 und 9, **dadurch gekennzeichnet, dass** bei entriegelter Verriegelungseinheit (10) die Trägerschwinge (8) relativ zu der Steuerschwinge (7) verdrehbar ist, wobei eine Verdrehung der Trägerschwinge (8) relativ zu der Steuerschwinge (7) in wenigstens einer Drehrichtung einen Zahneingriff der Klinke (125) mit dem Zahnsegment (23) bewirkt.

11. Fahrzeugsitz (101, 201) nach Anspruch 10, **dadurch gekennzeichnet, dass** die Klinke (125) in einer Schwenkrichtung, die zu einem Zahneingriff zwischen dem Verzahnungsbereich (31) der Klinke (125) und einem Zahnsegmentbereich (35) des Zahnsegments (23) führt, von dem Zapfen (41) entkoppelt ist.

12. Fahrzeugsitz (101, 201) nach einem der Ansprüche 9 bis 11, **dadurch gekennzeichnet, dass** die Steuernut (145) durch eine Öffnung (47) in einer von einem Verzahnungsbereich (31) abgewandten Richtung geöffnet ist.

13. Fahrzeugsitz (101, 201) nach einem der Ansprüche 5, 6, 8-12, **dadurch gekennzeichnet, dass** die Klinke (125) axial zwischen der Trägerschwinge (8) und einem Verstärkungsblech (53) angeordnet ist.

14. Fahrzeugsitz (101, 201) nach Anspruch 13, **dadurch gekennzeichnet, dass** das Verstärkungsblech (53) fest mit der Trägerschwinge (8) verbunden ist.

15. Fahrzeugsitz (101, 201) nach einem der vorhergehenden Ansprüche, **dadurch gekennzeichnet, dass** die Klinke (125) eine Zusatzmasse (49) aufweist, die insbesondere einteilig mit der Klinke (125) ausgeführt ist.

## Claims

1. Vehicle seat (101, 201), in particular motor vehicle seat, comprising at least one multi-bar linkage (4) for adjusting the seat height, said multi-bar linkage being defined by at least five transmission links (5, 6, 7, 8, 9), wherein, during normal operation of the vehicle seat (101, 201), the multi-bar linkage (4) is effective as a four-bar linkage because of a locking unit (10) effective between at least two transmission links (7, 8) of the at least five transmission links (5, 6, 7, 8, 9),
and a crash blocking unit (121) which, in the event of a crash, locks at least one frame (5), which is fixed on the vehicle structure, and rocker (8), as two of the at least five transmission links (5, 6, 7, 8, 9), to each other in such a manner that the multi-bar linkage (4) acts as a three-bar linkage, wherein a further transmission link (7) of the at least five transmission links (5, 6, 7, 8, 9) is arranged between the frame (5) and the rocker (8), and wherein, in the event of a crash, because of a load-controlled unlocking of the locking unit (10) the multi-bar linkage (4) can initially act as a five-bar linkage, as a result of which locking of the crash blocking unit (121) can be triggered,
**characterized in that**
the crash blocking unit (121) is lockable by an inertia-controlled pawl (125) of the crash blocking unit (121) independently of a load-controlled unlocking of the locking unit (10).

2. Vehicle seat (101, 201) according to Claim 1, **characterized in that** the pawl (125) has a toothing region (31) which, under load control, can be brought into meshing with a toothed segment (23) fastened to the frame (5).

3. Vehicle seat (101, 201) according to Claim 2, **characterized in that** the pawl (125) has a toothing region (31) which, under inertia control, can be brought into meshing with the toothed segment (23) fastened to the frame (5).

4. Vehicle seat (101, 201) according to one of the preceding claims, **characterized in that** the pawl (125) is mounted rotatably about a pawl axis of rotation (26).

5. Vehicle seat (101, 201) according to one of the preceding claims, **characterized in that** the rocker is a carrier rocker (8).

6. Vehicle seat (101, 201) according to Claim 5, **characterized in that** the pawl (125) is mounted on the carrier rocker (8) so as to be rotatable about the pawl axis of rotation (26).

7. Vehicle seat (101, 201) according to one of the preceding claims, **characterized in that** the mass center of gravity of the pawl (125) is arranged eccentrically with respect to a pawl axis of rotation (26) of the pawl (125) .

8. Vehicle seat (101, 201) according to one of the preceding claims, **characterized in that**, during normal operation of the vehicle seat (101, 201), the locking unit (10) locks a carrier rocker (8) and a control rocker (7), which is mounted rotatably with respect to the carrier rocker (8), to each other.

9. Vehicle seat (101, 201) according to Claim 8, **characterized in that** the control rocker (7) has a journal (41) which engages in a control groove (145) of the pawl (125), wherein the pawl (125) is mounted on the carrier rocker (8) so as to be rotatable about the pawl axis of rotation (26).

10. Vehicle seat (101, 201) according to Claims 2 and 9, **characterized in that**, when the locking unit (10) is unlocked, the carrier rocker (8) is rotatable relative to the control rocker (7), wherein a rotation of the carrier rocker (8) in at least one direction of rotation relative to the control rocker (7) brings about meshing of the pawl (125) with the toothed segment (23).

11. Vehicle seat (101, 201) according to Claim 10, **characterized in that** the pawl (125) is decoupled from the journal (41) in a pivoting direction which leads to meshing between the toothing region (31) of the pawl (125) and a toothed segment region (35) of the toothed segment (23).

12. Vehicle seat (101, 201) according to one of Claims 9 to 11, **characterized in that** the control groove (145) is opened by an opening (47) in a direction facing away from a toothing region (31).

13. Vehicle seat (101, 201) according to one of Claims 5,6,8-12, **characterized in that** the pawl (125) is arranged axially between the carrier rocker (8) and a reinforcing plate (53).

14. Vehicle seat (101, 201) according to Claim 13, **characterized in that** the reinforcing plate (53) is connected fixedly to the carrier rocker (8).

15. Vehicle seat (101, 201) according to one of the preceding claims, **characterized in that** the pawl (125) has an additional mass (49) which is formed in particular integrally with the pawl (125).

## Revendications

1. Siège de véhicule (101, 201), en particulier siège de véhicule automobile, comprenant au moins une articulation multiple (4) pour l'ajustement de la hauteur du siège, qui est définie par au moins cinq organes de transmission (5, 6, 7, 8, 9), l'articulation multiple (4), pendant le fonctionnement normal du siège de véhicule (101, 201), agissant en tant qu'articulation quadruple en raison d'une unité de verrouillage (10) agissant entre au moins deux organes de transmission (7, 8) des au moins cinq organes de transmission (5, 6, 7, 8, 9),
et une unité de verrouillage en cas de collision (121), qui, en cas de collision, verrouille l'un à l'autre au moins un bâti (5) fixé à la structure du véhicule et un bras oscillant (8) en tant que deux des au moins cinq organes de transmission (5, 6, 7, 8, 9) de telle sorte que l'articulation multiple (4) agisse en tant qu'articulation triple, un organe de transmission supplémentaire (7) des au moins cinq organes de transmission (5, 6, 7, 8, 9) étant disposé entre le bâti (5) et le bras oscillant (8), et l'articulation multiple (4), en cas de collision, en raison d'un déverrouillage de l'unité de verrouillage (10) commandé par la charge, pouvant agir d'abord en tant qu'articulation quintuple, de sorte qu'un verrouillage de l'unité de verrouillage en cas de collision (121) puisse être déclenché,
**caractérisé en ce que**
l'unité de verrouillage en cas de collision (121) peut être verrouillée indépendamment d'un déverrouillage de l'unité de verrouillage (10) commandé par la charge par un cliquet (125) de l'unité de verrouillage en cas de collision (121), commandé par l'inertie de masse.

2. Siège de véhicule (101, 201) selon la revendication 1, **caractérisé en ce que** le cliquet (125) présente une région de denture (31) qui peut être amenée en engagement denté de manière commandée par la charge avec un segment denté (23) fixé au bâti (5).

3. Siège de véhicule (101, 201) selon la revendication 2, **caractérisé en ce que** le cliquet (125) présente une région de denture (31) qui peut être amenée en engagement denté de manière commandée par l'inertie de masse avec le segment denté (23) fixé au bâti (5).

4. Siège de véhicule (101, 201) selon l'une quelconque des revendications précédentes, **caractérisé en ce que** le cliquet (125) est supporté de manière rotative autour d'un axe de rotation de cliquet (26).

5. Siège de véhicule (101, 201) selon l'une quelconque des revendications précédentes, **caractérisé en ce que** le bras oscillant est un bras oscillant de support (8).

6. Siège de véhicule (101, 201) selon la revendication 5, **caractérisé en ce que** le cliquet (125) est supporté de manière rotative autour de l'axe de rotation de cliquet (26) sur le bras oscillant de support (8).

7. Siège de véhicule (101, 201) selon l'une quelconque des revendications précédentes, **caractérisé en ce que** le centre de gravité de masse du cliquet (125) est disposé de manière excentrique par rapport à un axe de rotation de cliquet (26) du cliquet (125).

8. Siège de véhicule (101, 201) selon l'une quelconque des revendications précédentes, **caractérisé en ce que** pendant le fonctionnement normal du siège de véhicule (101, 201), l'unité de verrouillage (10) verrouille l'un à l'autre un bras oscillant de support (8) et un bras oscillant de commande (7) supporté de manière rotative par rapport au bras oscillant de support (8).

9. Siège de véhicule (101, 201) selon la revendication 8, **caractérisé en ce que** le bras oscillant de commande (7) présente un tourillon (41) qui s'engage dans une rainure de commande (145) du cliquet (125), le cliquet (125) étant supporté de manière rotative autour de l'axe de rotation de cliquet (26) sur le bras oscillant de support (8).

10. Siège de véhicule (101, 201) selon les revendications 2 et 9, **caractérisé en ce que** lorsque l'unité de verrouillage (10) est déverrouillée, le bras oscillant de support (8) peut tourner par rapport au bras oscillant de commande (7), une rotation du bras oscillant de support (8) par rapport au bras oscillant de commande (7) dans moins un sens de rotation provoquant un engagement denté du cliquet (125) avec le segment denté (23).

11. Siège de véhicule (101, 201) selon la revendication 10, **caractérisé en ce que** le cliquet (125), dans un sens de pivotement qui conduit à un engagement denté entre la région de denture (31) du cliquet (125) et une région de segment denté (35) du segment denté (23), est désaccouplé du tourillon (41).

12. Siège de véhicule (101, 201) selon l'une quelconque des revendications 9 à 11, **caractérisé en ce que** la rainure de commande (145) est ouverte par une ouverture (47) dans une direction opposée à une région de denture (31).

13. Siège de véhicule (101, 201) selon l'une quelconque des revendications 5, 6, 8-12, **caractérisé en ce que** le cliquet (125) est disposé axialement entre le bras oscillant de support (8) et une tôle de renforcement (53).

14. Siège de véhicule (101, 201) selon la revendication 13, **caractérisé en ce que** la tôle de renforcement (53) est connectée fixement au bras oscillant de support (8).

15. Siège de véhicule (101, 201) selon l'une quelconque des revendications précédentes, **caractérisé en ce que** le cliquet (125) présente une masse supplémentaire (49) qui est réalisée notamment d'une seule pièce avec le cliquet (125).
